# EUROPEAN PATENT APPLICATION

(11) **EP 4 124 502 A1**
(43) Date of publication of application: **01.02.2023**
(21) Application number: 22175594.5
(22) Date of filing: 26.05.2022
(51) Int. Cl.: B60L 58/13, B60L 50/61, B60L 58/14

(54) **CHARGING SYSTEM OF VEHICLE**

(30) Priority: 26.07.2021 JP 2021121682
(71) Applicant: Suzuki Motor Corporation, Hamamatsu-shi, Shizuoka 432-8611 (JP)
(72) Inventor: ITO, Yoshiki, Hamamatsu-shi, 432-8611 (JP)
(74) Representative: Haseltine Lake Kempner LLP

(57) **Abstract**

[Object]

It is to provide a charging system capable of preventing deterioration of battery SOC at vehicle start to thereby avoid a power performance of a vehicle from being limited.

[Solution]

A charging system includes an engine 2 to output a driving force for traveling the vehicle; a motor generator 3 to output a driving force for traveling the vehicle and generate electric power with the driving force of the engine; a battery 31 to supply/store electric power to/from the motor generator; and a ECU 10 to drive, when detecting an operation to request the vehicle to be turned off, the engine and cause the motor generator to generate electric power with the driving force of the engine to thereby charge the battery by a predetermined amount, thereafter turning off the vehicle 1.

## Description

### [Technical Field]

The present invention relates to a charging system of a vehicle.

### [Background Art]

Patent Literature 1 discloses that if a preset time elapses until a start command is given after a power source system of a vehicle is inputted with a stop command, DC/DC charges an auxiliary battery using a main battery.

### [Citation List]

### [Patent Literature]

[Patent Literature 1] JP 2014-155299 A

### [Summary of Invention]

### [Technical Problem]

However, the charging from the main battery to the auxiliary battery decreases the charging amount of the main battery, occasionally placing the main battery in not-good state at vehicle start. In such a case, a power performance of a motor generator to operate using electric power of battery may be limited.

The present invention has been made in view of the above-mentioned circumstances, and an object thereof is to provide a charging system of a vehicle capable of preventing deterioration of battery SOC at vehicle start, avoiding a power performance of a vehicle from being limited.

### [Solution to Problem]

According to an aspect of the present invention, there is provided a charging system of a vehicle, including: an engine to output a driving force for traveling the vehicle; a motor generator to output a driving force for traveling the vehicle and generate electric power with the driving force of the engine; a battery to supply/store electric power to/from the motor generator; and a control unit to drive, when detecting an operation to request the vehicle to be turned off, the engine and cause the motor generator to generate electric power with the driving force of the engine to thereby charge the battery by a predetermined amount, the control unit thereafter turning off the vehicle.

### [Advantageous Effect of Invention]

According to the present invention, it is possible to prevent deterioration of battery SOC at vehicle start, avoiding a power performance of a vehicle from being limited.

### [Brief Description of Drawings]

Fig. 1 is a schematic configurational diagram of a vehicle mounted with a charging system according to an embodiment of the present invention.
Fig. 2 is a flow chart showing procedures of a control process to be performed at system stop in the charging system.

### [Description of Embodiment]

A charging system of a vehicle according to an embodiment of the present invention includes: an engine to output a driving force for traveling the vehicle; a motor generator to output a driving force for traveling the vehicle and generate electric power with the driving force of the engine; a battery to supply/store electric power to/from the motor generator; and a control unit to drive, when detecting an operation to request the vehicle to be turned off, the engine and cause the motor generator to generate electric power with the driving force of the engine to thereby charge the battery by a predetermined amount, the control unit thereafter turning off the vehicle.

According to the charging system, it is possible to prevent deterioration of battery SOC at vehicle start, avoiding a power performance of a vehicle from being limited.

### [Embodiment]

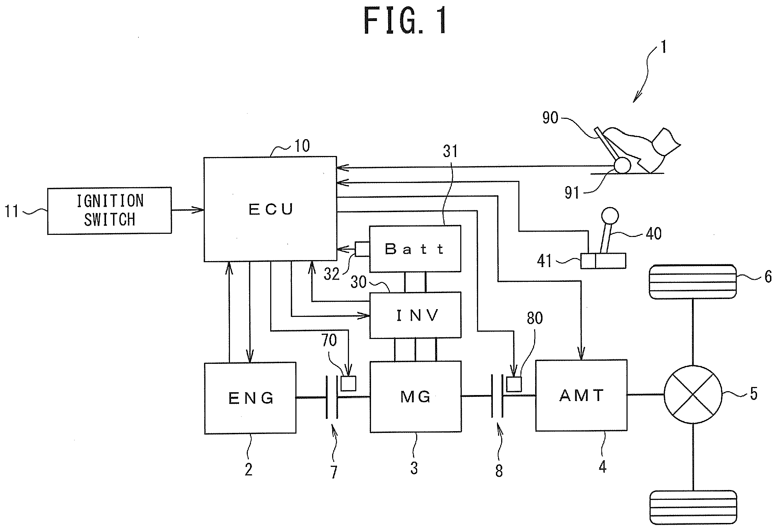

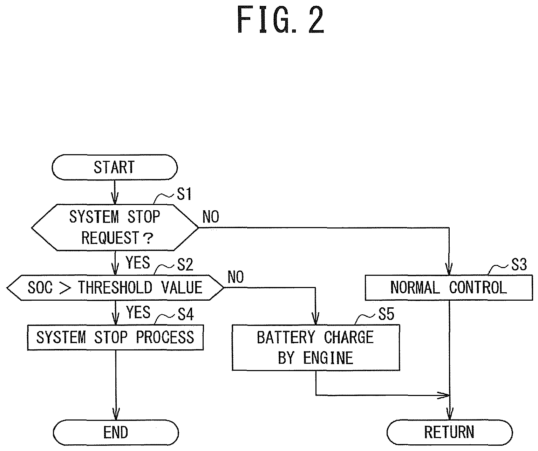

Hereinafter, referring to Figs. 1 and 2, a charging system according to an embodiment of the present invention will be described.

As shown in Fig. 1, a vehicle 1 mounted with a charging system according to an embodiment of the present invention includes an engine 2, a motor generator 3, an automated manual transmission 4 (AMT), a differential 5, drive wheels 6, an electronic control unit 10 (ECU) as a control unit.

The engine 2 is formed with cylinders, being configured to perform, for each cylinder, a series of four steps of an intake step, a compression step, an expansion step and an exhaust step.

The motor generator 3 functions as a motor to be driven by an electric power supplied from a battery 31 through an inverter 30, and also functions as a generator to generate an electric power applying a counter driving force inputted from the differential 5.

The inverter 30 is controlled by the ECU 10 to convert DC power supplied from the battery 31 into three-phase AC power and supply the converted AC power to the motor generator 3 and to convert three-phase AC power generated by the motor generator 3 into DC power and charge the battery 31 with the converted DC power.

The battery is a secondary battery such as a lithium ion battery.

The battery 31 is provided with a battery sensor 32 to detect a charging/discharging current, voltage and temperature of the battery 31. The battery sensor 32 is connected to the ECU 10, allowing the ECU 10 to calculate SOC (state of charge) indicative of charge state of the battery 31 using the detection result of the sensor 32.

The AMT 4 is configured to change, at a gear ratio corresponding to selected one of shift stages, a rotation speed inputted from at least one of the engine 2 and the motor generator 3 to an input shaft of the AMT and output it from an output shaft thereof to the differential 5. The output shaft of the AMT 4 is connected to the left and right drive wheels 6 through the differential 5.

In the AMT 4, one of shift stages is to be established, the shift stages including e.g., first (low-speed) to fifth (high-speed) forward shift stages and a reverse shift stage. The number of forward shift stages is to be determined depending on the specification of the vehicle 1, not limited to 5 (first to fifth shift stages).

A shift stage switching in the AMT 4 is performed by an actuator to be controlled by the ECU 10.

The ECU 10 switches among the shift stages in response to a shift position of a shift lever 40 to be operated by a driver. As the shift position, the shift lever 40 includes, e.g., forward position (D range), motor speed limitation position (B range), reverse position (R range), neutral position (N range), and parking position (P range), one of which is selected by the driver.

The selected shift position is detected by a shift position sensor 41. The shift position sensor 41 is connected to the EUC 10, to send the detection result thereto.

A clutch 7 such as a friction clutch is provided on a power transmission path between the engine 2 and the motor generator 3. That is, the engine 2 and the motor generator 3 are interconnected via the clutch 7.

The clutch 7 is operated by a clutch actuator 70 so as to be switched to any one of an engaged state where power is transmitted between the engine 2 and the motor generator 3, a release state where power is not transmitted therebetween, and a partial clutch engagement state where a torque is transmitted with a rotational difference therebetween. The clutch actuator 70 is connected to the ECU 10, being controlled thereby.

A clutch 8 as a connection/disconnection mechanism, such as a friction clutch, is provided on a power transmission path between the motor generator 3 and the AMT 4. The motor generator 3 and the AMT 4 are interconnected via the clutch 8.

The clutch 8 is operated by a clutch actuator 80 so as to be switched to any one of an engaged state where power is transmitted between the engine 2 and the AMT 4, a release state where power is not transmitted therebetween, and a partial clutch engagement state where a torque is transmitted with a rotational difference therebetween. The clutch actuator 80 is connected to the ECU 10, being controlled thereby.

For example, when the shift position is in D range (D range is selected), the ECU 10 determines one of shift stages to be established based on a vehicle speed, an accelerator pedal position, and the like, and controls the actuator of AMT 4 and the clutch actuator 80 to thereby cause the determined shift stage to be established.

Additionally, for example, when the shift position is in N range, the ECU 10 controls AMT 4 to inhibit a rotation from being transmitted between the input and output shafts of the AMT 4.

The vehicle 1 also includes an accelerator pedal 90 to be operated (depressed) by the driver. The depressed amount thereof is detected by an accelerator pedal sensor 91. The accelerator pedal sensor 91 is connected to the ECU 10, to send a signal thereto, the signal corresponding to the detected depressed-amount as an accelerator pedal position.

The ECU 10 is constituted by a computer unit including a Central Processing Unit (CPU), a Random Access Memory (RAM), a Read Only Memory (ROM), a flash memory to memorize data for back-up and the like, and input and output ports.

The ROM of the computer unit stores a program for causing the computer unit to function as the ECU 10, with various constants and maps. That is, the CPU executes the program stored in the ROM, causing the computer unit to function as the ECU 10.

The ECU 10 is connected with an ignition switch 11 in addition to the above-mentioned sensors. The ignition switch 11 detects whether a system start (e.g. power on) is requested to the vehicle 1 or whether a system stop (e.g. power off) is requested to the vehicle 1, and sends the detection result to the ECU 10.

The ECU 10 switches travel modes of the vehicle 1, such as EV mode and HEV mode.

The EV mode is one travel mode where the vehicle 1 is caused, with the clutch 7 released (with the clutch 8 engaged), to travel by power from only the motor generator 3. The HEV mode is another travel mode where the vehicle 1 is caused, with the clutch 7 engaged (with the clutch 8 engaged), to travel by power from the engine 2 or by power from both the engine 2 and the motor generator 3.

When restarting the stopped engine 2 upon transition from EV mode to HEV mode, the ECU 10 causes, with the clutch 7 placed in the partial clutch engagement state, a rotation speed of the engine 2 to increase, if the vehicle 1 travels with the shift position placed in a traveling range of D range, B range, or R range.

In addition, when restarting the stopped engine 2 upon transition from EV mode to HEV mode, the ECU 10 causes, if the shift position is placed in N range or P range, the clutch 7 to be placed into the engaged state and thereafter causes the motor generator 3 to start cranking for the engine 2 to thereby restart the engine 2.

Furthermore, when restarting the stopped engine 2 upon transition from EV mode to HEV mode, the ECU 10 causes the motor generator 3 to start cranking for the engine 2 with the clutch 7 placed in the engagement state while causing the motor generator 3 to generate driving force with the clutch 8 switched from the engaged state to the partial clutch engagement state, if the vehicle 1 is stopped with the traveling range or if the vehicle 1 travels at extremely low speed with the traveling range.

The engine 2 is connected with an exhaust pipe (not shown) provided with a catalyst to clean exhaust gas. The ECU 10 performs catalyst warm-up control of causing the engine 2 to output a limited low-output until temperature of the catalyst rises to activation temperature after engine start. In other words, when temperature of the catalyst is low (e.g., immediately after the engine 2 starts), the engine 2 operates to thereby warm-up the catalyst, an output thereof being limited so as not to exceed a predetermined low-output until temperature of the catalyst rises to activation temperature. At this time, the ECU 10 controls driving force of the motor generator 3 so as to correct shortage/excess driving force of the engine 2, enabling the driver's request driving force to be outputted to drive wheels 6.

Specifically, when torque of the engine 2 is insufficient to driver's request torque, the ECU 10 controls the motor generator 3 so as to compensate for the insufficient torque (shortage of engine torque with respect to driver's request torque) with torque of the motor generator 3.

On the other hand, when torque of the engine 2 is excessive to driver's request torque, the ECU 10 causes the motor generator 3 to generate electric power with the excess torque (surplus of engine torque with respect to driver's request torque).

Note that torque of the engine 2 becomes excessive to driver's request torque, when the accelerator pedal 90 is released during vehicle traveling in a case where the ECU 10 is configured to perform the catalyst warm-up control, by which the engine 2 operates with a lower-limit output or more to warm-up catalyst, even during deceleration where fuel cut is normally performed, for example.

When the ignition switch 11 is operated by the driver during power-on of the vehicle 1 (with the vehicle 1 powered-on), the ECU 10 detects the operation to the ignition switch 11 to thereby determine that a system stop is requested to the vehicle 1 and causes the motor generator 3 to generate electric power with driving force of the engine 2 to thereby charge the battery 31 by a predetermined amount, thereafter turning off the vehicle 1 (i.e., causing the vehicle 1 to be powered-off).

For example, the ECU causes the motor generator 3 to generate electric power for a predetermined period of time, to charge the battery 31 by the predetermined amount.

When an operation to request a system stop to the vehicle 1 is inputted (i.e., to request the vehicle 1 to be turned-off) during catalyst warm-up by the engine 2, the ECU 10 continues to drive the engine 2 to cause the motor generator 3 to generate electric power with the driving force of the engine 2 until the battery 31 is charged by the predetermined amount and thereafter, turns off the power of the vehicle 1.

Additionally, when the operation for a system stop is inputted in a case where the catalyst warm-up by the engine 2 is not performed (e.g., where the engine 2 is automatically stopped), the ECU 10 starts to, if the SOC of the battery 31 falls to or below a predetermined value, drive the engine 2 to thereby cause the motor generator 3 to generate electric power with the driving force of the engine 2 and continues the driving until SOC of the battery 31 exceeds the predetermined value, thereafter turning off the power of the vehicle 1.

Note that in a case where SOC of the battery 31 is high when the operation for a system stop is inputted, there may be possibility that an overcharge occurs due to an engine driving for catalyst warm-up at the next system start (i.e., upon turning on the power of the vehicle 1).

Hence, in such a case, it is preferable that the power of the vehicle 1 is turned off after a control to consume electric power of the battery 31, e.g., driving the motor generator 3 for cranking the engine 2 or driving a compressor for an air conditioner, is performed.

Next, referring to FIG. 2, a control process to be performed in the charging system during vehicle stop with the vehicle 1 rendered ON will be described. The control process begins upon establishment of a predetermined condition (e.g., the shift position is in P range) during the vehicle stop, and is repeated at intervals while the predetermined condition is established. When the control process begins, the engine 2 is supposed to be placed in idle stop state, or in drive state to warm-up the catalyst.

In step S1, the ECU 10 determines whether there is a system stop request (i.e., whether the driver requests the vehicle 1 to be turned off).

If the ECU 10 determines there is the system stop request (if YES in step S1), it allows the process to proceed to step S2. Otherwise (if NO in step S1), the ECU 10 allows the process to proceed to step S3.

In step S2, the ECU 10 determines whether SOC of the battery 31 is larger than a threshold value.

If the ECU 10 determines SOC of the battery 31 is larger than the threshold value (if YES in step S2), it allows the process to proceed to step S4. Otherwise (if NO in step S2), the ECU 10 allows the process to proceed to step S5.

In step S3, the ECU 10 performs a normal control at system activation for the vehicle 1. Thereafter, the ECU 10 allows the process to return to step S1 with an interval.

In step S4, the ECU 10 performs a system stop process to thereby stop a system (i.e., turn off the power of the vehicle 1), terminating the process.

In step S5, the ECU 10 drives the engine 2 (i.e., continues to drive in a case of the engine in driven state or starts to drive in a case of the engine in stopped state) to cause the motor generator 3 to generate electric power with the driving force of the engine 2 to thereby charge the battery 31, returning the process. The ECU continues to charge the battery 31 (i.e., continues to drive the engine 2) until the ECU 10 determines "YES" in step S2 of the returned process, rendering SOC of the battery 31 larger than the threshold value.

As mentioned-above, when detecting the operation to the ignition switch 11 for a system stop, the ECU 10 drives the engine 2 to cause the motor generator 3 to generate electric power with the driving force of the engine 2 to thereby charge the battery 31 by a predetermine amount and thereafter, turns off the power of the vehicle 1. This predetermined amount is, for example, charging amount to allow SOC of the battery 31 to exceed the threshold value, which may be determined based on comparison between the current SOC (SOC in step S5) and the threshold value.

Thus, it is possible to prevent SOC of the battery from becoming low, avoiding the power performance of the motor generator 3, at the next vehicle start, from being limited due to the limitation of the battery performance.

Note that when detecting the operation for a system stop during catalyst warm-up, the ECU 10 continues to drive the engine 2 to thereby charge the battery 31 by the predetermined amount and thereafter, turns off the power of the vehicle 1. In other words, in such a case, the ECU 10 maintains the already-driven engine 2 to thereby charge the battery 31 by the predetermined amount.

Thereby, it is possible to prevent SOC of the battery from becoming low, satisfying exhaust gas purification performance by the catalyst warm-up and the power performance of the vehicle.

Note that when detecting the operation for a system stop, the ECU 10 may charge, not depending on the current SOC of the battery 31, the battery 31 by a predetermined amount, but preferably does it as long as the current SOC falls to or below the threshold value, in consideration of avoiding overcharge. In such a case, it is more preferable that the ECU 10 charges the battery 31 by a minimum charging amount necessary for exceeding the threshold value (i.e., the ECU 10 stops, immediately upon exceeding the threshold value, driving the engine 2 to thereby stop charging the battery 31).

Thus, it is possible to avoid overcharge while preventing SOC of the battery from becoming low.

By the way, in the vehicle 1, the output shaft of the engine 2 is connected to the motor generator 3 via the clutch 7, and the motor generator 3 is connected to the input shaft of the AMT 4 via the clutch 8. Alternatively, the output shaft of the engine 2 may be connected to a transmission via a clutch, and the motor generator 3 may be connected to a crankshaft of the engine 2 via a belt. Furthermore, the vehicle 1 may not include the clutches if just configured to drive, even at vehicle stop, an engine to thereby charge a battery by a motor generator.

In addition, in the embodiment, the EUC 10 is configured to perform some determinations and calculations based on information from various sensors. But not limited to this, the vehicle 1 may include a communication unit communicatable with a device such as an external server which is installed outside the vehicle, said device being configured to perform, instead of the ECU 10, the determinations and calculations based on the information from various sensors sent from the communication unit, the communication unit being configured to receive the determination and calculation results from said device and perform some controls using the received ones.

Although the embodiment of the present invention is disclosed above, it is obvious that those skilled in the art can modify it without departing from the scope of the present invention. It is intended that all such modifications and equivalents are encompassed by the claims.

### [Reference Signs List]

1: vehicle
2: engine
3: motor generator
7: clutch
8: clutch
10: ECU (control unit)
11: ignition switch
30: inverter
31: battery
32: battery sensor

## Claims

1. A charging system of a vehicle (1), comprising:
an engine (2) to output a driving force for traveling the vehicle;
a motor generator (3) to output a driving force for traveling the vehicle and generate electric power with the driving force of the engine;
a battery (31) to supply/store electric power to/from the motor generator; and
a control unit (10) to drive, when detecting an operation to request the vehicle to be turned off, the engine and cause the motor generator to generate electric power with the driving force of the engine to thereby charge the battery by a predetermined amount, the control unit thereafter turning off the vehicle.

2. The charging system as claimed in claim 1, wherein
the control unit is configured to drive the engine for catalyst warm-up, and
the control unit continues, upon detecting the operation during catalyst warm-up, to drive the engine to thereby charge the battery by the predetermined amount, thereafter turning off the vehicle.

3. The charging system as claimed in claim 1 or 2, wherein
if SOC of the battery is equal to or less than a predetermined value upon the detection of the operation, the control unit drives the engine until SOC of the battery exceeds the predetermined value and thereafter, turns off the vehicle.
